# EUROPÄISCHE PATENTANMELDUNG

(11) **EP 2 295 271 A1**
(43) Veröffentlichungstag der Anmeldung: **16.03.2011**
(21) Anmeldenummer: 10009377.2
(22) Anmeldetag: 09.09.2010
(51) Int. Cl.: B60J 1/14

(54) **Fensteranordnung für ein Schienenfahrzeug oder ein Busfahrzeug**

(30) Priorität: 09.09.2009 DE 102009040657
(71) Anmelder: Breitner, Marcus Stephan, 42389 Wuppertal (DE)
(72) Erfinder: Breitner, Marcus Stephan, 42389 Wuppertal (DE)
(74) Vertreter: Ostriga, Sonnet, Wirths & Roche

(57) **Zusammenfassung**

Dargestellt und beschrieben ist u. a. eine Fensteranordnung (10) für ein Schienenfahrzeug oder ein Busfahrzeug, wie Reisebus oder Stadtbus, umfassend ein feststehendes Fenster (11), in dem eine Aussparung (25) angeordnet ist, die von einem beweglichen Fenster (12) verschließbar ist, wobei das feststehende Fenster mit seinen seitlichen Randbereichen (16) an der Fahrzeugkarosserie (13, 14a, 14b) festgelegt ist, und wobei eine Sicherheitseinrichtung (17) vorgesehen ist, die im Falle einer Beschädigung des feststehenden Fensters ein Hinabfallen des beweglichen Fensters verhindert.

Die Besonderheit besteht u. a. darin, dass die Sicherheitseinrichtung von einer Fangeinrichtung (17) gebildet ist, die ein erstes, an der Karosserie befestigtes Element (18) und ein zweites, an dem beweglichen Fenster befestigtes Element (19) umfasst, wobei die beiden Elemente ein Paar von Kontaktflächen (20, 21) aufweisen, die mit Spiel (S, A) ineinander greifen.

## Beschreibung

Die Erfindung betrifft eine Fensteranordnung nach dem Oberbegriff des Anspruches 1.

Derartige Fensteranordnungen sind bekannt. Eine Fensteranordnung mit den Merkmalen des Oberbegriffes des Anspruches 1 ist aus der EP 0 778 168 bekannt. Dort ist bereits eine Sicherheitseinrichtung vorgesehen, die im Falle einer Beschädigung des feststehenden Fensters ein Hinabfallen des beweglichen Fensters verhindert. Die Sicherheitseinrichtung umfasst dort ein streifenförmiges Element, welches sich entlang der gesamten Breite des beweglichen Fensters erstreckt und zusätzlich die Randbereiche des feststehenden Fensters untergreift. Eine Befestigung dieser streifenförmigen Haltemittel erfolgt dadurch, dass deren freie Enden zwischen dem Rand des feststehenden Fensters und der Karosserie mit eingeklebt werden. Wird das feststehende Fenster beschädigt, ist das bewegliche Fenster über diese Haltelasche unmittelbar mit der Karosserie verbunden und kann insoweit an einem Hinabfallen und damit einhergehenden Verletzungsrisiken für Passagiere gehindert werden.

Aus dem deutschen Gebrauchsmuster DE 20 2004 005 506 U1 geht darüber hinaus eine Fensteranordnung hervor, bei der das bewegliche Fensterteil gänzlich unabhängig von dem feststehenden Fensterteil befestigt ist. Hierzu sind Befestigungsbügel vorgesehen, die unmittelbar in die karosserieseitigen Holme hineinverankert werden.

Bei der zuerst beschriebenen, bekannten Fensteranordnung besteht das Problem darin, dass eine Befestigung der Fensteranordnung mit feststehendem und beweglichem Fensterteil zugleich erfolgt. Das bewegliche Fensterteil ist fest an dem festen Fensterteil angeklebt. Die Fensteranordnung wird insgesamt als Baueinheit in der Karosserie verklebt. Der Rand des feststehenden Fensterteils ist allerdings nicht umlaufend vorsprungsfrei ausgebildet, da die freien Enden der streifenförmigen Haltelasche mit dem Rand des feststehenden Fensters überdecken und eben diese mit verklebt werden müssen. Wird das feststehende Fenster beispielsweise mit einem umlaufenden doppelseitigem Klebeband festgeklebt, müssen in diesem Bereich immer besondere Maßnahmen getroffen werden, die zu einer zeitaufwändigen und schwierigen Montage führen.

Bei dem weiteren, zuletzt beschriebenen Stand der Technik ist zwar das feststehende Fensterteil mit einem vorsprungfrei umlaufenden freien Fensterrand ausgebildet, so dass die Baueinheit, umfassend das feststehende Fensterteil und das bewegliche Fensterteil, einfach an der Karosserie festgelegt werden kann. Die zweite Baueinheit zur Befestigung der Sicherheitseinrichtung muss mit den Bügeln allerdings gesondert an der Karosserie befestigt werden. Hierzu muss der Bügel einerseits an der Karosserie festgelegt, z. B. festgeklebt oder geschraubt werden, und andererseits eine Befestigung des innenseitigen Bügelendes an den außenseitigen streifenförmigen Haltelaschen vorgenommen werden. Dabei hat es sich in der Praxis als äußerst schwierig erwiesen, die Montagetoleranzen einzuhalten. Insbesondere ist zu berücksichtigen, dass die karosserieseitige Befestigung des Haltebügels erst erfolgt, wenn das feste Fensterteil karosserieseitig schon festgelegt ist. Damit sind allerdings auch die Anschlusspunkte an den Haltelaschen bereits festgelegt. Der nachfolgend karosserieseitig zu verankernde Haltebügel muss derartig angebracht werden, dass seine Eingriffenden, z. B. die Schraubendurchgriffsöffnungen, in exakter Flucht zu den Schraubendurchgriffsöffnungen an den freien Enden der Haltelasche angeordnet sind.

Ausgehend von der zuletzt beschriebenen Fensteranordnung besteht die Aufgabe der Erfindung darin, eine Fensteranordnung mit den Merkmalen des Oberbegriffes des Anspruches 1 derartig weiterzuentwickeln, dass bei vereinfachter Montage die Sicherungsfunktion der Sicherheitseinrichtung gewährleistet ist.

Die Erfindung löst diese Aufgabe mit den Merkmalen des Anspruches 1, insbesondere mit denen des Kennzeichenteils, und ist demgemäß **dadurch gekennzeichnet, dass** die Sicherheitseinrichtung von einer Fangeinrichtung gebildet ist, die ein erstes, der Karosserie zugeordnetes Element und ein zweites, an dem beweglichen Fenster befestigtes Element umfasst, wobei die beiden Elemente ein Paar von Kontaktflächen aufweisen, die mit Spiel ineinander greifen.

Das Prinzip der Erfindung besteht somit im Wesentlichen darin, anstelle einer Befestigung des beweglichen Fensterteils über eine zweite Einbaueinheit lediglich eine Fangeinrichtung vorzusehen. Die Fangeinrichtung sieht vor, dass ein Kraftschluss zwischen dem beweglichen Fensterteil bzw. einer dessen Beweglichkeit gewährleistenden Einrichtung und der Karosserie - unabhängig von der Kraftleitung über die feststehende Scheibe - erst dann eintritt, wenn die feststehende Fensterscheibe beschädigt oder zerstört ist. Im montierten Zustand, also in einem unversehrten Zustand des feststehenden Fensters, ist das bewegliches Fenster lediglich über das feststehende Fenster mit der Karosserie fest verbunden. Das bewegliche Fenster ist mit der Karosserie über die Fangeinrichtung lediglich lose bzw. gar nicht verbunden. Eine feste Verbindung zwischen dem beweglichen Fensterteil und der Karosserie über die Fangeinrichtung wird erst dann in Kraft gesetzt, wenn das feststehende Fenster beschädigt ist, und der über das feststehende Fenster bestehend Kraftschluss nicht mehr gewährleistet ist und das bewegliche Teil herunterzufallen droht. Eine geringfügige Verlagerungsbewegung des beweglichen Fensterteils, bedingt durch die Gravitation, führt dazu, dass ein Paar von Kontaktflächen miteinander in kontaktierenden Kontakt kommt. Im unversehrten Zustand des feststehenden Fensters ist das Paar von Kontaktflächen nicht miteinander in einem kraftschlüssigen Eingriff. Im Gegenteil greifen die Kontaktflächen mit einem Spiel ineinander. Es findet zwar eine geometrische Überlappung oder Überdeckung des Kontaktflächenpaares miteinander statt, dies allerdings ohne dass ein Kraftschluss besteht.

Die Fangeinrichtung ist insoweit zweiteilig ausgebildet: Sie umfasst ein erstes, karosserieseitiges Element, welches der Karosserie zugeordnet ist und insbesondere an der Karosserie befestigt wird. Es kann sich dabei beispielsweise um ein wannenförmiges, oder hülsenförmiges oder rohrförmiges Element handeln, welches einen Innenraum aufweist, in dem ein zweites Element, welches fest relativ zu dem beweglichen Fenster angeordnet ist, mit Radialspiel, aber mit axialer und radialer Überdeckung untergebracht werden kann. Das zweite Element ist fest an dem beweglichen Fensterteil angeordnet und stellt eine Halterung für das bewegliche Fenster dar. In diesem Sinne kann das zweite Element entweder unmittelbar fest an dem beweglichen Fensterteil angeordnet sein oder an dem beweglichen Fensterteil mittelbar fest, beispielsweise über ein zwischen dem beweglichen Fensterteil und dem zweiten Element fest angeordnetes Verbindungselement. Wenn das feststehende Fensterteil zerbricht, beispielsweise im Falle eines Unfalls oder einer wie auch immer gearteten Beschädigung wird das bewegliche Fensterteil durch die miteinander kraftschlüssig in Eingriff geratenen beiden Elementen gehalten.

Dadurch, dass das erste Element und das zweite Element lediglich mit Spiel ineinander greifen, kann eine Montage des ersten Elementes an der Karosserie unter Ermöglichung deutlich größerer Toleranzen als beim Stand der Technik vorgenommen werden. Es ist lediglich wichtig, dass in montiertem Zustand das erste und das zweite Element miteinander in Überdeckung geraten. Das Maß der Überdeckung kann dabei so großzügig gestaltet sein, dass Montagetoleranzen auch von mehreren Millimetern ohne weiteres aufgefangen werden können. Dadurch wird die Montage der erfindungsgemäßen Fensteranordnung deutlich erleichtert.

Das bewegliche Fenster ist vorteilhaft schwenkbar relativ zu dem feststehenden Fenster ausgebildet. Hierzu kann eine Lagereinrichtung vorgesehen sein, die das bewegliche Fenster mit dem feststehenden Fenster beweglich verbindet. Die Lagereinrichtung kann beispielsweise von herkömmlichen Bauelementen gebildet sein.

Die Aussparung in dem feststehenden Fensterteil kann eine Randaussparung oder eine mittige, d. h. allseits umrandete Aussparung sein. Sie ist vorzugsweise bündig von dem beweglichen Fenster verschließbar. Auch ein im Wesentlichen bündiger Verschluss oder ein geringfügiger Versatz von wenigen Millimetern ist von der Erfindung umfasst.

Das zweite Element kann sich über die gesamte Breite des beweglichen Fensters erstrecken. Bei dieser Ausgestaltung der Erfindung ist das zweite Element z. B. streifenartig ausgebildet. Es ist allerdings auch möglich, das zweite Element jeweils nur in einem Eckbereich oder Randbereich des beweglichen Fensterteils anzuordnen.

Das zweite Element kann vorteilhaft Eingriffsenden aufweisen, die steckerartig über den seitlichen Rand des beweglichen Elementes hinaus vorstehen und mit einer buchsenartigen Anordnung des ersten Elementes axial überlappen.

Weiter vorteilhaft kann vorgesehen sein, dass das erste Element als Fangschale für das zweite Element ausgebildet ist. Auch hier ist vorteilhafter Weise eine Axialüberdeckung und ein Radialspiel vorgesehen.

Das erste Element kann zwei Fangschalen aufweisen, die rechts und links des beweglichen Fensterteils angeordnet sind. Die Bezeichnungen rechts und links sind zu verstehen im Sinne von in Fahrtrichtung des Fahrzeugs vorne und hinten.

Anzumerken ist, dass eine Befestigung der erfindungsgemäßen Fensteranordnung auf vereinfachte Weise erfolgen kann: das bewegliche Fenster ist auf im Wesentlichen herkömmliche Art und Weise an der feststehenden Scheibe befestigt, z. B. festgeklebt. Die Fensteranordnung mit feststehendem und beweglichen Fenster wird karosserieseitig befestigt, z. B. eingeklebt. Anschließend kann das erste Element der Fangeinrichtung gänzlich gesondert karosserieseitig befestigt werden. Aufgrund des Radialspiels und eines gegebenenfalls auch vorgesehenen Axialspiels kann eine toleranzunabhängige Befestigung erzielt werden, die mit hoher Sicherheit gewährleistet, dass im Falle einer Zerstörung des feststehenden Teils das bewegliche Fenster nicht hinabfällt.

Vorteilhafterweise ist das erste, karosserieseitige Element an der Karosserie angeordnet oder befestigt und der Karosserie auf diese Weise zugeordnet. Eine derartige Befestigung des ersten Elementes muss gewährleisten, dass die Kontaktflächen der beiden Elemente mit Spiel ineinandergreifen können, insbesondere derart, dass die Kontaktflächen bei unversehrtem feststehendem Fenster nicht miteinander in einem kraftschlüssigen Eingriff stehen und dass das bewegliche Fenster im Falle der Beschädigung des feststehenden Fensters durch die miteinander kraftschlüssig in Eingriff geratenden Elemente gehalten werden kann. Hierzu kann die karosserieseitige Befestigung oder Festlegung des ersten Elementes insbesondere unbeweglich fixiert befestigt erfolgen, derart, dass das erste Element relativ zu der Fahrzeugkarosserie auch unter starker Krafteinwirkung, jedenfalls in seinem Befestigungsbereich, nicht relativ zur Karosserie bewegbar ist. Die Festlegung des ersten Elementes an einem Vertikalholm der Fahrzeugkarosserie kann hierzu beispielsweise durch Verkleben eines doppelseitigen Klebebandes erfolgen, welches zwischen einem Befestigungsabschnitt des ersten Elementes und dem Karosserieholm sandwichartig angeordnet ist. Eine alternative vorteilhafte Befestigung des ersten Elementes an der Karosserie kann beispielsweise über Bohrschrauben erfolgen. Mit Hilfe derartiger Schrauben entfällt die Präparierung des Karosserieholmes, da die Bohrschrauben bei ihrer Befestigung selbstständig entsprechende Löcher im Karosserieholm erzeugen. Vorteilhafterweise kann das erste Element hierbei mittelbar (bespielsweise über ein gesondertes Befestigungselement) oder unmittelbar an der Fahrzeugkarosserie verschraubt werden.

Alternativ kann das erste Element an der Karosserie aber auch derartig angeordnet oder befestigt sein, dass das erste Element bei Beschädigung des feststehenden Fensters zwar etwas gegenüber der Karosserie verlagert werden kann (beispielsweise kann das erste Element samt beweglichem Fenster etwas absacken), ein abruptes Herabfallen des beweglichen Fensters auf den Fahrzeugboden jedoch vermieden werden kann. In diesem Sinn ist es vorstellbar, dass das erste Element einen karosserieseitigen Fahrzeugholm klammerartig umgreift, ohne an diesem unbeweglich fixiert zu sein, ein Absacken des beweglichen Fensters in einer Unfallsituation jedoch aufgrund einer Reibung zwischen erstem Element und dem Karosserieholm oder aufgrund eines Verkantens verhindert werden kann. Eine derartige Befestigung des ersten Elementes an der Karosserie bzw. an einem Karosserieholm kann insbesondere dadurch verbessert werden, dass der klammerartige Befestigungsabschnitt des ersten Elementes an seiner dem Fahrzeugholm zugeordneten Innenseite spreizartige Klemmelemente aufweist, welche beispielsweise einstückig aus dem Halterungsabschnitt des ersten Elementes herausgearbeitet sein können und die Spannung zwischen Holm und erstem Element erhöhen. Schließlich wird ein Karosserieholm bei einem entsprechenden Fahrzeug üblicherweise mit einer entsprechenden Verblendung oder Innenverkleidung überdeckt. Eine derartige Innenverkleidung kann hierbei den klammerartigen Halteabschnitt des ersten Elementes überdecken, so dass dieser zwischen Holm und Innenverkleidung angeordnet ist und somit durch die Innenverkleidung zusätzlich gehaltert wird. Die Innenverkleidung wird überlicherweise an dem Holm angeschraubt, dort verklebt oder dort verklemmt.

Schließlich besteht die Möglichkeit, dass das erste Element und das zweite Element nach Art einer Rast- oder Clipsanordnung ausgebildet sind. Hierbei kann eines der Elemente eine durchsteckbare Lasche oder Öse aufweisen, welche von dem ersten Element durchsteckt wird. Sofern dieses andere Element dabei entsprechende hinterschnappende Bereiche, wie beispielsweise nachgebende Haken oder ähnliches aufweist, kann hierbei das eine Element das andere Element nach Art einer Clipsanordnung mit Spiel durchstecken, wobei die hakenartigen Bereiche dann Widerhaken ausbilden, welche verhindern können, dass das bewegliche Fenster in einer Unfallsituation herunterfällt. Bei einem Einclipsen der beiden Elemente liegt hierbei insbesondere noch kein Kraftschluss vor.

Die Erfindung betrifft darüber hinaus auch ein Verfahren zur Fertigung einer Fensteranordnung.

Das bekannte Verfahren ist eingangs bereits beschrieben worden. Hiervon ausgehend besteht die Aufgabe der Erfindung darin, ein Verfahren bereitzustellen, welches eine vereinfachte Montage ermöglicht.

Die Erfindung löst diese Aufgabe mit den Merkmalen des Anspruches 13.

Die Besonderheit besteht darin, dass eine Zuordnung eines zweiten Elementes der Sicherheitsanordnung zu der Karosserie, insbesondere eine fixierte oder unfixierte Festlegung an der Karosserie, derart erfolgt, und zwar unabhängig von der Befestigung des beweglichen Fensters gemeinsam mit dem feststehenden Fenster, dass die beiden Elemente, die ein Paar von Kontaktflächen aufweisen, mit ihren Kontaktflächen mit Spiel ineinandergreifen. Damit ist eine toleranzunabhängige Befestigung erreicht.

Hierbei erfolgt die Durchführung des Verfahrensschrittes a) des Anspruches 13, insbesondere zeitlich vor einer Durchführung der Verfahrensschritte b) und c). Vorteilhafterweise erfolgt eine Durchführung des Verfahrensschrittes b) zeitlich vor einer Durchführung des Verfahrensschrittes c).

Weitere Vorteile der Erfindung ergeben sich aus den nicht zitierten Unteransprüchen sowie anhand der nachfolgenden Beschreibung zweier in den Zeichnungen dargestellter Ausführungsbeispiele.

In den Figuren zeigen:
- Fig. 1: in einer schematischen, teilgeschnittenen und abgebrochenen Ansicht ein erstes Ausführungsbeispiel einer erfindungsgemäßen Fensteranordnung mit einer durch eine Fangeinrichtung bereitgestellten Sicherheitseinrichtung,
- Fig. 2: in einer Darstellung ähnlich der Fig. 1 ein zweites Ausführungsbeispiel einer erfindungsgemäßen Fensteranordnung,
- Fig. 3: in einer schematischen, teilgeschnittenen und abgebrochenen Ansicht einen Transversalschnitt durch einen Bereich der Fensteranordnung der Fig. 1 etwa gemäß Schnittlinie III-III in Fig. 1,
- Fig. 4: in einer Darstellung ähnlich der Fig. 3 einen Schnitt durch einen Teilbereich der Fensteranordnung der Fig. 2 etwa gemäß Schnittlinie IV-IV in Fig. 2,
- Fig. 5: in einer schematischen, teilgeschnittenen Einzeldarstellung die Fangeinrichtung der Fig. 3 etwa gemäß Schnittlinie V-V,
- Fig. 6: in einer Darstellung gemäß Fig. 5 die Fangeinrichtung der Fig. 4 in Alleindarstellung etwa gemäß Schnittlinie VI-VI in Fig. 4,
- Fig. 7: ein alternatives Ausführungsbeispiel einer Fangeinrichtung einer erfindungsgmäßen Fensteranordnung in einer abgebrochen dargestellten, sehr schematischen Seitenansicht,
- Fig. 8: die Haltevorrichtung gemäß Fig. 7 in einer sehr schematischen teilgeschnittenen Aufsicht und
- Fig. 9: ein weiteres alternatives Ausführungsbeispiel einer Fanganordnung für eine erfindungsgemäße Fensteranordnung, etwa in einer Ansicht gemäß Fig. 8 mit einem clipshakenförmig ausgebildeten ersten Element und einem laschenförmig ausgebildeten zweiten Element.

Die in ihrer Gesamtheit in den Zeichnungen mit 10 bezeichnete Fensteranordnung soll beispielhaft anhand der Ausführungsbeispiele der Zeichnungen beschrieben werden. Dabei sei der nachfolgenden Beschreibung vorausgeschickt, dass der Übersichtlichkeit halber gleiche oder miteinander vergleichbare Teile oder Elemente mit gleichen Bezugszeichen, teilweise unter Hinzufügung kleiner Buchstaben oder Apostrophs bezeichnet worden sind.

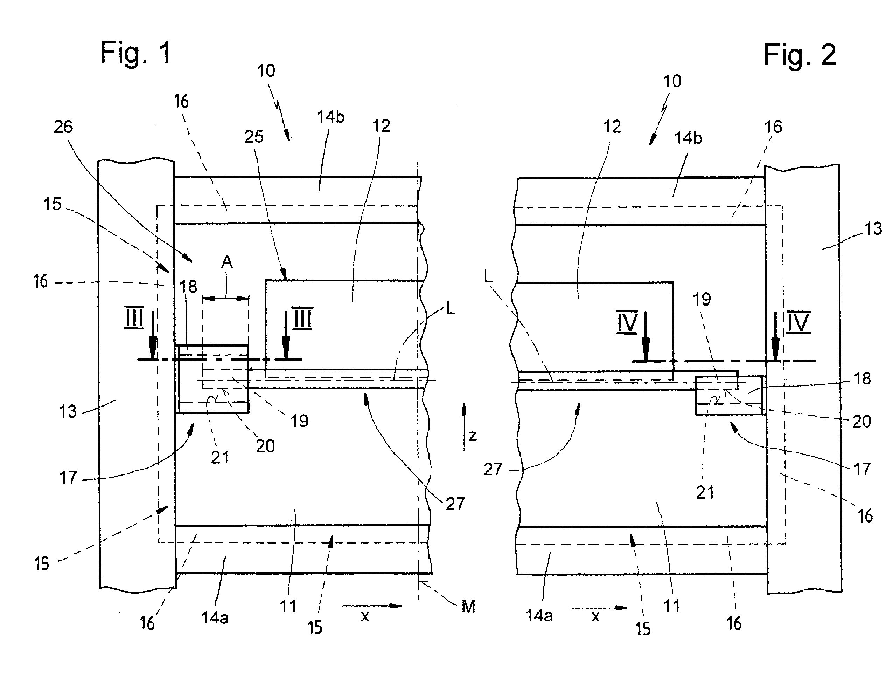

Fig. 1 zeigt in einer sehr schematischen, abgebrochenen, teilgeschnittenen Darstellung die Innenansicht eines Ausführungsbeispiels einer erfindungsgemäßen Fensteranordnung 10. Diese Darstellung zeigt sich beispielsweise einem Betrachter in Blickrichtung nach Außen, wenn er sich im Innenraum des Fahrzeuges befindet und die Fensteranordnung 10 betrachtet.

Die Fahrtrichtung des Fahrzeuges ist mit x bezeichnet. Fig. 1 zeigt lediglich die linke Hälfte der Fensteranordnung 10, die z. B. bezüglich der mit M bezeichneten Geraden spiegelsymmetrisch ausgebildet ist, wobei die rechte Hälfte der Übersichtlichkeit halber nicht dargestellt ist.

Das Fahrzeug weist eine karosserieseitige Öffnung 26 auf, die von Karosseriebereichen 14a, 14b, 13 allseitig begrenzt ist. Vorliegend ist die Karosserieöffnung 26 der Fig. 1 linksseitig von einem Karosserieholm 13, obenseitig von einem Karosserieholm 14b und untenseitig von einem Karosserieholm 14a begrenzt. Die Karosserie-Querholme 14a, 14b erstrecken sich, was nicht dargestellt ist, bezüglich der Fahrtrichtung x weiter nach vorn und sind an dem nicht dargestellten, in Fahrtrichtung x vorderen Ende der Karosserieöffnung 26 durch einen weiteren Seitenholm 13 miteinander verbunden.

In die Karosserieöffnung 26 ist eine Fensteranordnung 10 eingesetzt, die ein bewegliches Fensterteil 12 und ein feststehendes Fensterteil 11 umfasst. Das bewegliche Fensterteil 12 verschließt in geschlossenem Zustand eine Aussparung 25 in dem feststehenden Teil 11. Derartige Fenster sind insbesondere bei Reisebussen, Stadtbussen und Schienenfahrzeugen gewünscht, z. B. um für eine Durchlüftung des Fahrgastraumes zu sorgen.

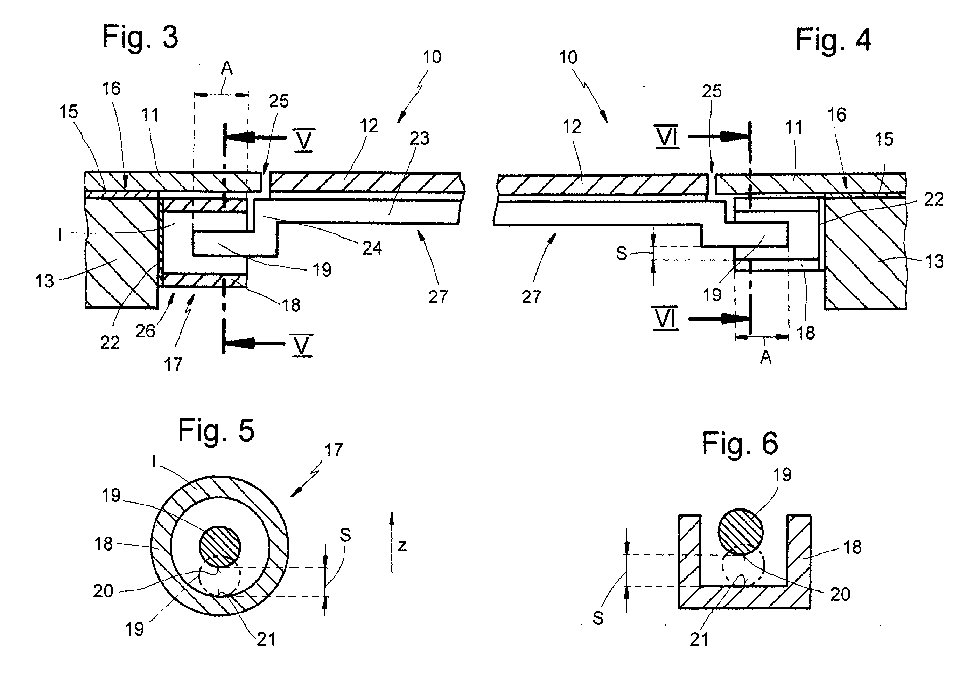

Das feststehende Fensterteil 11 ist vorzugsweise allseitig mit seinen Randbereichen 16 an der Karosserie festgeklebt. Hierzu lässt Fig. 1 lediglich schematisch, Fig. 3 gleichermaßen schematisch aber angedeutet eine Kleberaupe oder einen Klebesaum 15 erkennen. Das feststehende Fensterteil 11 ist also vorzugsweise randseitig umlaufend an den Karosseriebestandteilen 13, 14a, 14b festgeklebt oder auf andere Art und Weise befestigt.

Das bewegliche Fenster ist vorzugsweise um eine horizontal verlaufende Schwenkachse L relativ zu dem feststehenden Fensterteil 11 schwenkbar, d. h. nach innen klappbar ausgebildet. In geschlossenem Zustand gemäß Fig. 3 sind das feststehende Fensterteil 11 und das bewegliche Fensterteil 12 relativ zueinander bündig angeordnet.

Zur Bewerkstelligung einer Beweglichkeit, insbesondere einer Verschwenkbarkeit des beweglichen Fensterteiles 12, ist eine lediglich angedeutete Lagereinrichtung 27 vorgesehen, die beispielsweise entlang des unteren, in Fahrtrichtung x verlaufenden Randes des beweglichen Fensterteils 12 angeordnet ist. Die Lagereinrichtung 27 ist beispielsweise nach Art eines herkömmlichen Scharniers ausgebildet, wobei ein Scharnierteil fest an dem feststehenden Fenster 11 und das andere Scharnierteil fest an dem beweglichen Fenster 12 angeordnet ist.

In bestimmten Unfallsituationen tritt das Problem auf, dass das feststehende Fensterteil 11 beschädigt oder zerstört wird. Da es sich dabei häufig um Sicherheitsglas handelt, ist die Gefahr für die Passagiere oder für andere Unfallbeteiligte gering. Das feststehende Fensterteil zerbricht häufig in zahlreiche kleinere Stücke, die jedenfalls beim Hinabfallen keine unmittelbare Gefahr darstellen. Anders verhält es sich mit dem beweglichen Fensterteil 12, welches relativ massiv und schwer ausgebildet ist. Zerbricht das feststehende Fensterteil 11, droht das bewegliche Fensterteil hinabzufallen und könnte Passagiere oder andere Unfallbeteiligte gefährden. Um ein Hinabfallen zu vermeiden, ist bei der erfindungsgemäßen Fensteranordnung 10 eine Fangeinrichtung 17 vorgesehen. Die Fangeinrichtung 17 umfasst ein erstes Element 18 und ein zweites Element 19.

Das erste Element 18 ist bei dem Ausführungsbeispiel der Figuren 1, 3 und 5 von einem im Querschnitt kreisförmigen Rohrstück (einer Hülse) gebildet. Diese ist mit ihrem bezüglich Fig. 1 linken Ende an dem Seitenholm 13 festgelegt. Das zweite Element 19 ist fest relativ zu dem beweglichen Fenster 12 angeordnet. Hierzu kann, wie das Ausführungsbeispiel der Fig. 3 andeutet, das zweite Element 19 einstückig mit einer Halterungslasche 23 oder einem Bestandteil der Lagereinrichtung 27 verbunden sein. Um das zweite Element 19 aus der Ebene der Halterung .23 herauszubringen, ist eine Abkröpfung 24 vorgesehen. Angemerkt sei dabei auch, dass die Halterung 23 Bestandteil der Lagereinrichtung 27 sein kann, aber nicht zwingend sein muss. Entscheidend ist, dass das zweite Element 18 unmittelbar oder mittelbar fest relativ zu dem beweglichen Fenster 12 angeordnet ist.

Das zweite Element 19 ist als bolzenartiger oder zapfenartiger Vorsprung ausgebildet, der sich im Wesentlichen entgegen der Fahrtrichtung x streckt. Das zweite Element 19 ragt in den Innenraum I des ersten Elementes 18 hinein. Man erkennt, dass eine radiale Beabstandung S zwischen einer Kontaktfläche 20 am zweiten Element 19 und einer Gegenkontaktfläche 21 am ersten Element 18 besteht. Dieses Radialspiel zeigt, dass in montiertem Zustand der Fensteranordnung 10 eine Kontaktierung im Sinne eines Kraftflusses nicht gegeben ist aber nicht gegeben sein muss.

Erst wenn das feststehende Fensterelement 11 beschädigt ist und insoweit ein Kraftschluss zwischen dem beweglichen Fenster 12 und der Karosserie über das feststehende Fenster 11 nicht mehr gewährleistet ist, und das bewegliche Fensterteil 12 insoweit durch Gravitationswirkung entgegen der Vertikalrichtung z nach unten fällt, kommen die Kontaktfläche 20 und die Gegenkontaktfläche 21 miteinander in Kontakt oder wird ein Kraftschluss erreicht. Diese Situation ist in Fig. 5 gestrichelt dargestellt. Der Bolzen 19 ist um den Radialspielweg S nach unten verlagert.

Fig. 1 und Fig. 3 lassen erkennen, dass das erste Element 18 und das zweite Element 19 in Axialrichtung einen axialen Überdeckungsbereich A aufweisen. Zugleich ist aufgrund der rohrförmigen oder hülsenartigen Ausbildung des ersten Elementes 18 gewährleistet, dass das zweite Element 19 nicht aus dem Innenraum I des ersten Elementes 18 hinaus gelangen kann. Damit ist gewährleistet, dass das zweite Element 19, nach Beschädigung des feststehenden Fensters 11, nicht über die in Fig. 5 gestrichelt dargestellte Position hinaus weiter nach unten, also entgegen der Richtung z, verlagert werden kann. Das bewegliche Fenster 12 ist somit an einem Herabfallen gehindert und wird durch das karosserieseitig festgelegte erste Element 18 sicher gehalten.

Die Montage der Fenstereinrichtung 10 gemäß dem Ausführungsbeispiel der Figuren 1, 3 und 5 ist insoweit vorteilhaft, als dass die Fensteranordnung 10 mit feststehendem Fenster 11 und daran bereits festgelegtem beweglichen Fenster 12 zunächst auf übliche Art und Weise an der Karosserie befestigt wird. Erst anschließend kann eine Befestigung des ersten Elementes 18 der Fangeinrichtung 17 an dem Seitenholm 13 oder einem anderen Ort der Karosserie erfolgen. Die Befestigung des ersten Elementes 18 kann allerdings aufgrund des Radialspiels S und des Axialspiels A sehr großen Toleranzen unterliegen. Die Montage ist insoweit deutlich vereinfacht, ohne dass die Sicherheitsfunktion der Fangeinrichtung 17 beeinträchtigt würde.

In dem zweiten Ausführungsbeispiel gemäß den Figuren 2, 4 und 6 ist anstelle eines ersten Elementes 18 in Rohform eine wannenförmige Ausbildung des ersten Elementes vorgesehen. Dies lässt Fig. 6 erkennen. Schließlich kommen auch Ausführungsbeispiele in Betracht, bei denen z. B. Führungsflächen im Falle einer Beschädigung des feststehenden Fensterteils 11 dafür sorgen, dass das bewegliche Fensterteil 12 sicher karosserieseitig gehalten ist und eine die Sicherheit gewährleistenden Position erreicht.

Es wird darauf hingewiesen, dass die Figuren die Erfindung lediglich schematisch, prinzipienhaft zeigen. Insbesondere kann das Radialspiel S oder die axiale Überdeckung A den Bedürfnissen und Gegebenheiten entsprechend gewählt bzw. angepasst werden. Entscheidend ist, dass der maßgebliche Kraftschluss zwischen beweglichem Fenster 12 und Karosserie über den Weg der Fangeinrichtung erst in Funktion gesetzt wird, wenn das bewegliche Fenster 12 hinabzufallen droht. So lange das feststehende Fenster 11 unversehrt ist, muss die Fangeinrichtung 17 nicht in Funktion treten und kann, aufgrund einer spielerlaubenden Anordnung von erstem Teil 18 und zweitem Teil 19 der Fangeinrichtung 17 relativ zueinander, eine toleranzunempfindliche Befestigung zulassen.

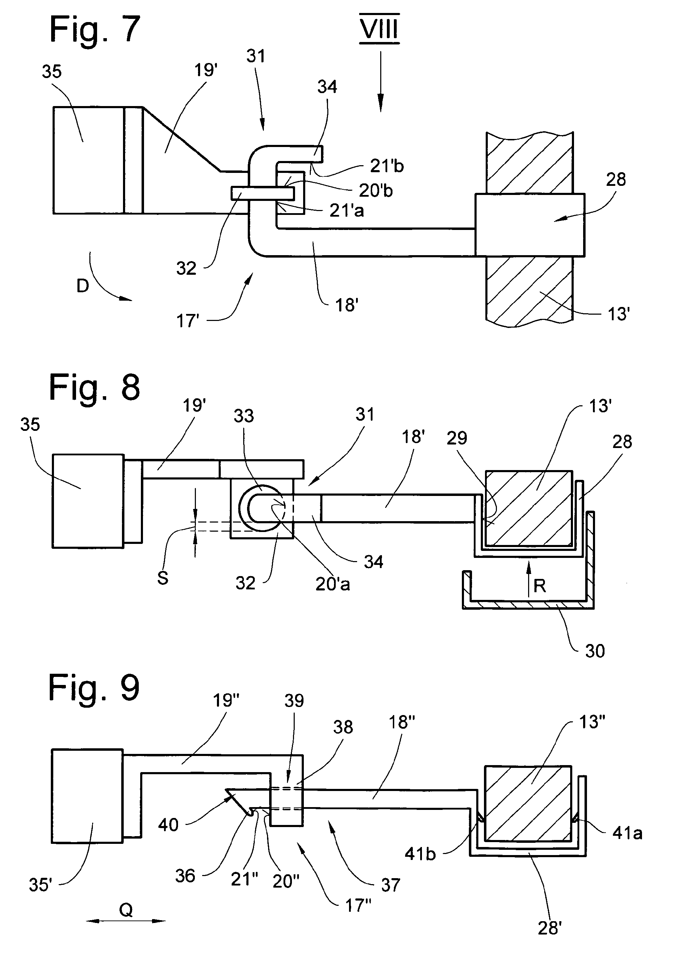

In den Figuren 7 und 8 ist ein weiteres Ausführungsbeispiel eines Teils einer erfindungsgemäßen Fensteranordnung, insbesondere eine Fangeinrichtung 17' dargestellt. Das erste Element 18' ist hierbei, wie Fig. 7 zeigt, einem Fahrzeugseitenholm 13' zugeordnet, wobei das erste Element 18' den Karosserieholm 13' mit einem Befestigungsabschnitt 28 umklammert. Wie insbesondere die in Fig. 8 dargestellte Aufsicht zeigt, umgreift der Befestigungsabschnitt 28 des ersten Elementes 18' den Karosserieholm 13' klammerartig, so dass das erste Element 18' insbesondere durch die Reibung zwischen Befestigungsabschnitt 28 und Seitenholm 13' in seiner Höhenposition gehaltert wird. Diese Reibung, welche sich aufgrund der sehr schematischen Darstellung in Fig. 8, in welcher sich der Befestigungsabschnitt 28 und der Holm 13' lediglich der Übersichtlichkeit halber nicht kontaktieren, nicht unmittelbar erschließt, kann durch ein Verkanten des Befestigungsabschnittes 28 an dem Holm 13' in einer Unfallsituation, also bei Zerbrechen des in Fig. 8 nicht dargestellten (hinsichtlich Fig. 8 jedoch oberhalb der dargestellten Elemente anzuordnenden) feststehenden Fensters noch unterstützet werden. Vorteilhafterweise kann die Innenkontur 29 des Befestigungsabschnittes 28 zur Erhöhung des Reibungskoeffizienten auch eine Gummibeschichtung oder ähnliches aufweisen.

Desweiteren kann die Befestigung des ersten Elementes 18' an dem Karosserieholm 13' dadurch erhöht werden, dass dem Karosserieholm 13' ein lediglich in Fig. 8 angedeutetes Abdeckelement 30 einer Innenverkleidung des Fahrzeuges zugeordnet wird. Dieses Abdeckelement 30 funktioniert nach Art einer Verschalung und kann über die gesamte Höhenerstreckung des Seitenholmes 13' vorgesehen sein. Da das Abdeckelement 30 somit auch den Befestigungsabschnitt 28 des ersten Elementes 18' übergreift, kann der Befesitungsabschnitt 28 sandwichartig zwischen Holm 13' und Abdeckelement 30 gehalten oder befestigt werden. Diesbezüglich sei darauf hingewiesen, dass das Abdeckelement 30 üblicherweise in Richtung R über den Holm gestülpt und an der Karosserie oder an dem Holm 13' verschraubt oder verklebt wird. Lediglich der Vollständigkeit halber sei angemerkt, dass das Abdeckelement 30 in der Seitenansicht gemäß Fig. 7 der Übersichtlichkeit halber weggelassen worden ist.

Fig. 7 zeigt darüber hinaus, dass das erste Element 18' an seinem dem Befestigungsabschnitt entgegengesetzten Ende einen Hakenabschnitt 31 aufweist. Der Hakenabschnitt 31 durchgreift hierbei mit Spiel ein laschen- oder ösenartiges Element 32 des zweiten Elementes 19'.

Fig. 8 ist dabei zu entnehmen, dass die Lasche 32 zur Ermöglichung eines Durchgreifens eine etwa kreisförmige Ausnehmung 33 aufweist, durch welche der Hakenabschnitt 31 des ersten Elementes 18' hindurchgreifen kann.

Damit der Hakenabschnitt 31 des ersten Elementes 18' an der Lasche 32 des zweiten Elementes 19' unverlierbar gesichert werden kann, weist der Hakenabschnitt 31 ein Sicherungsende 34 auf, welches hakenförmig ausgebildet ist und verhindert, dass der Hakenabschnitt 31 des ersten Elementes 18 aus der Lasche 32 des zweiten Elementes 19' ungewollt herausgelangen kann. Das Sicherungsende 34 kann hierbei einstückig mit dem Rest des ersten Elementes 18' ausgebildet sein und insbesondere eine leichte Flexibilität aufweisen, so dass das Sicherungsende 34 die Lasche 32 bei der Montage der Vorrichtung nachgebend durchstecken kann.

Bezugnehmend auf Fig. 7 sei zudem angemerkt, dass das zweite Element 19 an einem in Fig. 7 und 8 nicht dargestellten beweglichen Fenster angeordnet ist, beispielsweise an einer ein Scharnier 35 umfassenden Funktionseinheit, wobei diese Anbindung in den Figuren 7 und 8 lediglich sehr schematisch dargestellt ist.

Droht nun in einer Unfallsituation ein Herabfallen des beweglichen Fensters und somit des zweiten Elementes 19' wird auf das zweite Element 19' eine Kraft in etwa in Richtung D gemäß Fig. 7 ausgeübt. Hierbei kann insbesondere eine Kontaktfläche 21'a des Hakenabschnittes 31 des ersten Elementes 18' mit einer der Ausnehmung 33 zugeordneten, lediglich in Fig. 8 gestrichelt angedeuteten Kontaktfläche 20'a in Kontakt geraten. Auch ist eine Kontaktierung mehrerer weiterer Kontaktflächen möglich. Beispielsweise kann eine dem Sicherungsende 34 zugeordnete Gegenkontaktfläche 21'b mit einer auf der Oberseite der Lasche 32 angeordneten Kontaktfläche 20'b in Kontakt geraten und ein Fallen des beweglichen Fensters verhindern oder abdämpfen.

Bezüglich dem Ausführungsbeispiel der Fig. 7 und 8 sei schließlich angedeutet, dass diese lediglich schematisch zu verstehen ist und hinsichtlich seiner die Fangeinrichtung 17' ausbildenden, die Lasche 32 bzw. den Hakenabschnitt 31 ausbildenden Enden auch austauschbar ist, derart dass der Hakenabschnitt 31 dem beweglichen Fenster zugeordnet wird und die Lasche 32 der Karosserie.

Schließlich sei bezüglich der Fig. 7 auch angemerkt, dass grundsätzlich auch eine Verkippung von Hakenabschnitt 31 sowie Lasche 32 um beispielsweise 90° in die selbe Richtung vorstellbar ist um die Achse der Längserstreckung der Fangeinrichtung 17' herum, derart dass sich die Lasche 32 nicht in einer annähernd horizontalen sondern eher in einer vertikalen Ebene erstreckt.

Ein letztes Ausführungsbeispiel der erfindungsgemäßen Fangeinrichtung 17" ist in Fig. 9 dargestellt. Während das dem Karosserieholm 13" zugeordnete Ende des ersten Elementes 18", wie in dem voranstehend beschriebenen Ausführungsbeispiel, als klammerartiger Befestigungsabschnitt 28' ausgebildet ist, ist in der Fig. 9 ein optionales Abdeckelement für den Holm der Übersichtlichkeit halber weggelassen. Stattdessen weist der klammerartige Befestigungsabschnitt 28' federartige Vorspannelemente 41 a und 41 b auf, welche beispielsweise einstückig aus dem Halteabschnitt 28' herausgearbeitet sein können oder dort separat befestigt sind und nach Art von spreizenden Klemmen den Befestigungsabschnitt 28' noch vorteilhafter an dem Seitenholm 13" festklemmen oder befestigen können.

Fig. 9 zeigt zudem, dass das den Befestigungsabschnitt 28' entgegengesetzte Ende des ersten Elementes 18' widerhakenartig ausgebildet ist. Hier weist das erste Element 18" insbesondere einen Rastvorsprung 36 auf. Das erste Element ist in seinem Mittelbereich 37 etwa schaftförmig ausgebildet, weist beispielsweise einen runden Querschnitt auf und durchgreift im in Fig. 9 dargestellten, montierten Zustand einen endseitigen Hülsenabschnitt 38 des zweiten Elementes 19". Der Hülsenabschnitt 38 des zweiten Elementes 19" weist hierzu einen (seiner Grundform nach dem Querschnitt des Mittelbereichs 37 des ersten Elementes 18" entsprechenden) Durchbruch 39 auf. Der Durchbruch 39 kann beispielsweise eine zyinderförmge Innenkontur aufweisen. Die Innenkontur 39 des Durchbruchs weist hierbei einen etwas größeren Durchmesser auf als die Außenkontur des den Durchbruch 39 durchsteckenden Mittelbereiches 37. Zwischen der Außenkontur des Mittelbereichs 37 und der Innenkontur des Durchbruchs 39 besteht somit Spiel. Insbesondere berührt der Mittelbereich 37 des ersten Elementes 18" die Innenkontur des Durchbruchs 39 des zweiten Elementes 19" im montierten Zustand der Vorrichtung nicht. Hierauf kommt es allerdings gar nicht an. Es ist vielmehr entscheidend, dass Spiel besteht. Demnach kann beispielsweise die Oberseite des Mittelbereiches 37 ohne weiteres ohne Kraftschluss an der Innenkontur des Durchbruchs 39 anliegen.

Entscheidend ist bei diesem Ausführungsbeispiel, dass die einander zugeordneten Enden von erstem Element 18" und zweitem Element 19" nach Art einer Rastvorrichtung, einer Schnappvorrichtung oder einer Clipseinrichtung ausgebildet sind. Bei der Montage der beiden Elemente kann der Kopfbereich 40 des ersten Elementes 18" den Durchbruch 39 durchstecken, wobei der Rastvorsprung 36 ein- oder zusammengedrückt wird und nach Durchstecken des Kopfbereiches 40 durch den Durchbruch 39 entspreizen kann. Auf diese Weise wird eine Unverlierbarkeit gewährleistet, wobei trotzdem noch Spiel, insbesondere für eine Montageerleichterung, bereitgestellt wird.

Im Falle einer Unfallsituation und bei Herabfallen des an die Funktionseinheit 35' angeschlossenen beweglichen Fensters kann insbesondere auch eine voneinander weg gerichtete Krafteinwirkung zwischen dem ersten Element 18" und dem zweiten Element 19" in Längsrichtung Q erfolgen, wobei insbesondere eine an dem Rastvorsprung 36 angeordnete Gegenkontaktfläche 21" in Kontakt mit einer hülsenabschnittseitigen Kontaktfläche 20" gelangen kann, um in der Unfallsituation ein Herabfallen des beweglichen Fensters zu vermeiden. Weitere Kontaktflächen und Gegenkontaktflächen sind dem ersten Element 18" und zweiten Element 19", insbesondere im Bereich des Durchbruchs 39 zugeordnet, wobei diese Kontaktflächen und Gegenkontaktflächen in der Unfallsituation kraftschlüssig miteinander kontaktierend in Eingriff kommen können.

Lediglich der Vollständigkeit halber sei angemerkt, dass auch bei dem Ausführungsbeispiel gemäß Fig. 9 das erste Element und das zweite Element, von ihren Befestigungsarten abgesehen, austauschbar sind, derart, dass ein steckerartiges Element mit Kopfbereich 40 und Rastvorsprung 36 dem beweglichen Fenster zugeordnet ist und ein Ösen- oder Laschenabschnitt 38 karosserieseitig angeordnet wird. Zudem sei erläuternd auch noch angemerkt, dass in der Unfallsituation selbstverständlich nicht nur Kräfte in Querrichtung Q auftreten sondern insbesondere bezogen auf die Fig. 9 auch Kräfte in die Zeichnungsebene hinein, also bezüglich des Fensters nach unten, wobei insbesondere auch die Oberseite des mittleren Abschnitts 37 mit der Oberseite der inneren Kontur des Durchbruchs 39 in Kontakt und kraftschlüssig in Eingriff geraten kann.

## Patentansprüche

1. Fensteranordnung (10) für ein Schienenfahrzeug oder ein Busfahrzeug, wie Reisebus oder Stadtbus, umfassend ein feststehendes Fenster (11), in dem eine Aussparung (25) angeordnet ist, die von einem beweglichen Fenster (12) verschließbar ist, wobei das feststehende Fenster mit seinen seitlichen Randbereichen (16) an der Fahrzeugkarosserie (13, 14a, 14b) festgelegt ist, und wobei eine Sicherheitseinrichtung (17) vorgesehen ist, die im Falle einer Beschädigung des feststehenden Fensters ein Hinabfallen des beweglichen Fensters verhindert, **dadurch gekennzeichnet, dass** die Sicherheitseinrichtung von einer Fangeinrichtung (17, 17', 17") gebildet ist, die ein erstes, der Karosserie zugeordnetes Element (18, 18', 18") und ein zweites, an dem beweglichen Fenster befestigtes Element (19, 19', 19") umfasst, wobei die beiden Elemente ein Paar von Kontaktflächen (20, 21; 20'a, 21 "a) aufweisen, die mit Spiel (S, A) ineinander greifen.

2. Fensteranordnung nach Anspruch 1, **dadurch gekennzeichnet, dass** das bewegliche Fenster (12) schwenkbar relativ zu dem feststehenden Fenster (11) ausgebildet ist.

3. Fensteranordnung nach Anspruch 1 oder 2, **dadurch gekennzeichnet, dass** die Aussparung (25) von dem beweglichen Fenster(12) bündig verschließbar ist.

4. Fensteranordnung nach einem der vorangegangenen Ansprüche, **dadurch gekennzeichnet, dass** sich das zweite Element (19) über die gesamte Breite des beweglichen Fensters (12) erstreckt.

5. Fensteranordnung nach einem der vorangegangenen Ansprüche, **dadurch gekennzeichnet, dass** das zweite Element (19) Eingriffsenden aufweist, die über den seitlichen Rand des beweglichen Fensters (12) hinaus vorstehen.

6. Fensteranordnung nach einem der vorangegangenen Ansprüche, **dadurch gekennzeichnet, dass** das erste Element (18) als Fangschale für das zweite Element ausgebildet ist.

7. Fensteranordnung nach einem der vorangegangenen Ansprüche, **dadurch gekennzeichnet, dass** das erste Element zwei Fangschalen aufweist, die bezogen auf die Geometrie des beweglichen Fensters (12) im Wesentlichen symmetrisch zu dem beweglichen Fenster angeordnet sind.

8. Fensteranordnung nach einem der vorangegangenen Ansprüche, **dadurch gekennzeichnet, dass** die Kontaktflächen (20, 21) des Paars mit Spiel (S, A) derart ineinander greifen, dass das Paar von Kontaktflächen, im unversehrten Zustand des feststehenden Fensters (11), nicht miteinander in einem kraftschlüssigen Eingriff steht, und dass das bewegliche Fenster (12), im Falle der Beschädigung des feststehenden Fensters, durch die miteinander kraftschlüssig in Eingriff geratenden beiden Elemente (18, 19) gehalten werden kann.

9. Fensteranordnung nach einem der vorangegangenen Ansprüche, **dadurch gekennzeichnet, dass** das erste Element (18) an der Karosserie angeordnet oder befestigt ist.

10. Fensteranordnung nach einem der vorangegangenen Ansprüche, **dadurch gekennzeichnet, dass** das erste Element (18) an der Karosserie unbeweglich fixiert befestigt, insbesondere verschraubt, ist.

11. Fensteranordnung nach einem der vorangegangenen Ansprüche, **dadurch gekennzeichnet, dass** die Fangeinrichtung (17', 17") einen Sicherungsabschnitt (34, 36) aufweist, welcher, insbesondere mittels Hintergriff, bewirkt, dass das erste Element (18', 18") und das zweite Element (19', 19") einander unverlierbar zugeordnet sind.

12. Fensteranordnung nach einem der vorangegangenen Ansprüche, **dadurch gekennzeichnet, dass** die Fangeinrichtung (17") als Rast- oder Clipseinrichtung ausgebildet ist.

13. Verfahren zur Fertigung einer Fensteranordnung (10) für ein Schienenfahrzeug oder ein Busfahrzeug, wie Reisebus oder Stadtbus, mit einem feststehenden Fenster (11), in dem eine Aussparung (25) angeordnet ist, die von einem beweglichen Fenster (12) verschließbar ist, umfassend die folgenden Schritte:
a) Festlegen des beweglichen Fensters (12) gemeinsam mit einem Element (19) einer Sicherheitsanordnung, die im Falle einer Beschädigung des feststehenden Fensters ein Hinabfallen des beweglichen Fensters verhindert, an dem feststehenden Fenster (11),
b) Festlegen des feststehenden Fensters (11) gemeinsam mit dem beweglichen Fenster an der Fahrzeugkarosserie (13, 14a, 14b),
c) Zuordnung eines zweiten Elementes (18) der Sicherheitsanordnung (17) zu der Karosserie, derart, dass die beiden Elemente (18, 19), die ein Paar von Kontaktflächen (20, 21) aufweisen, mit ihren Kontaktflächen mit Spiel (A, S) ineinander greifen.

14. Verfahren zur Fertigung einer Fensteranordnung (10) nach Anspruch 13, **dadurch gekennzeichnet, dass** das zweite Element (18) in Verfahrensschritt c) an der Karosserie festgelegt wird.
